# EUROPÄISCHE PATENTANMELDUNG

(11) **EP 1 525 920 A2**
(43) Veröffentlichungstag der Anmeldung: **27.04.2005**
(21) Anmeldenummer: 04023527.7
(22) Anmeldetag: 02.10.2004
(51) Int. Cl.: B05B 7/14

(54) **Pulverquelle für eine Pulverbeschichtungsanlage**

(30) Priorität: 23.10.2003 DE 10349715
(71) Anmelder: EISENMANN Maschinenbau GmbH & Co. KG, 71032 Böblingen (DE)
(72) Erfinder: Katefidis, Apostolos, 71116 Gärtringen (DE); Reichler, Jan, 78465 Konstanz (DE)
(74) Vertreter: Ostertag, Ulrich, Dr.

(57) **Zusammenfassung**

Eine Fließpulverquelle (10) für eine Pulverbeschichtungsanlage umfasst einen Vorratsbehälter (38) für Pulver und eine an dessen Auslass vorgesehene Zellenrad-Dosiereinheit (44). Der Auslass der Letzteren ist mit dem Einlass eines Konditionierbehälters (46) verbunden, welcher einen mit Druckgas beaufschlagten durchlässigen Bodenbereich (124) aufweist und zugeführtes Pulver und Luft in ein fließfähiges Gemisch überführt, welches durch einen Auslass (12) beim unteren Ende des Konditionierbehälters (46) abgezogen wird.

## Beschreibung

Die Erfindung betrifft eine Pulverquelle für eine Pulverbeschichtungsanlage.

Pulverbeschichtungsanlagen dienen insbesondere zur Pulverbeschichtung von Werkstücken mit Lackpulver, welches nach Aufschmelzen und Aushärten einen in der Regel glatten und widerstandsfähigen Überzug über das Werkstück bildet.

Die Partikel des aufzubringenden Pulvers sind nicht ausgehärtet, damit sie nach dem Erwärmen zu einer durchgehenden homogenen Lackschicht zusammenfließen können und nach dem Aushärten die glatte und harte Lackschicht bilden.

Die nicht ausgehärteten aus nur angehärtetem oder getrocknetem Material gemahlenen Pulverpartikel erreichen bei Temperaturen im Bereich von 80 °C bis 90 °C ihren Erweichungspunkt und gehen dann bei höheren Temperaturen allmählich in den fließfähigen, flüssigen Zustand über, so dass benachbarte Pulverpartikel zu einer durchgehenden Schicht verschmelzen.

Die nicht ausgehärteten Pulverpartikel, die in der Praxis einen Durchmesser von etwa 15 µm bis etwa 40 µm, in der Regel um die 25 µm aufweisen, sind weder scher- noch temperaturstabil, so dass die Pulverpartikel bei mechanischer Beanspruchung Klumpen/Agglomerate bilden können.

Durch die vorliegende Erfindung soll eine Pulverquelle zur Verwendung in einer Pulverbeschichtungsanlage angegeben werden, mit welcher ein sicheres und gleichmäßiges Zuführen von Pulver zu Pulverauftragstationen ohne die Gefahr eines Verklumpens von Pulverpartikeln gewährleistet wird.

Diese Aufgabe ist erfindungsgemäß gelöst durch eine Pulverquelle mit den im Anspruch 1 angegebenen Merkmalen.

Bei der erfindungsgemäßen Pulverquelle hat man durch die Zellenrad-Dosiereinrichtung eine gleichbleibend gute Dosierung des aus dem Vorratsbehälter ausgetragenen Pulvers. Diese gut dosierte Pulvermenge wird im nachgeschalteten Konditionierbehälter in einem Fluidisierungsgas gleichförmig verteilt und das so erhaltene fließfähige Pulver / Gasgemisch kann über Leitungen an eine oder mehrere Pulverbeschichtungsstationen gefördert werden.

Durch das Fluidisierungsgas wird im unter Bereich des Vorratsbehälters ein Überdruck erzeugt, durch den eine gleichmäßige Puderabgabe an eine Applikationseinheit sicher gegeben ist. Bei mehreren angeschlossenen Applikationseinheiten kann man bei unterschiedlichen inneren Widerständen der Förderstrecken und der Applikationseinheiten (z.B. Pistole oder Glocke) eine zusätzliche Pulverförderung vorsehen Diese kann z.B. eine Beschleunigerdüse aufweisen, wie sie in der DE 100 53 295 A1 beschrieben ist.

Mit der erfindungsgemäßen Dosiereinrichtung wird verglichen mit bekannten Puderfördereinrichtungen zudem die zum Transport des Pulvers notwendige Luftmenge reduziert. Daraus folgt, dass die Pulverwolke "welcher" wird. Dadurch kann auch der Overspray-Anteil geringer werden.

Vorteilhafte Weiterbildungen der Erfindung sind in Unteransprüchen angegeben.

Mit der Weiterbildung der Erfindung gemäß Anspruch 2 wird erreicht, dass in den einzelnen Zellen des Zellenrades keine Winkel vorliegen, in denen Pulverpartikel Keil- oder Klemmwirkungen ausgesetzt wären, die zu einem bleibenden Haften von Teilmengen des jeweils in eine Zelle gegebenen Pulvers führen könnte. Hierdurch würde die gleichbleibende Genauigkeit der Pulverzufuhr beeinträchtigt, zum einen bei denjenigen Zyklen, bei denen an der abgegebenen, dem Zellenvolumen entsprechenden Einheitsmenge ein Teil fehlt, zum anderen dann, wenn eine Menge hängengebliebenen Pulvers aus einer Zelle losbricht. Bei einem Zellenrad gemäß Anspruch 2 hat ein Pulvervolumen keine Oberflächenbereiche der Zelleninnenfläche, an denen sich Pulver festsetzen könnte.

Der Anspruch 3 gibt bevorzugte Geometrien an, mit denen ein solches Anbacken/Festwachsen von Pulver an den Zellenwänden verhindert wird.

Bei einer Pulverquelle gemäß Anspruch 4 ist auch die Übergangsstelle von Pulver-Vorratsbehälter zu den Zellen des Zellenrades jeweils glatt, so dass ein stetiges unbehindertes Nachrutschen von Pulver aus dem Vorratsbehälter in das Zellenrad gewährleistet ist. Auch an den Übergangsstellen zwischen Einführfläche und Zellenrad können sich somit keine Partikelpakete bilden.

Mit der Weiterbildung der Erfindung gemäß Anspruch 5 wird erreicht, dass auch durch adhäsive Kräfte physikalischer, chemischer oder elektrostatischer Natur kein bleibendes Festhalten von Pulver an Wänden der Zellen des Zellenrades erfolgt, da derartigen adhäsiven Kräften ein von der Zellenwand weggerichteter sanfter Gasstrom entgegenwirkt.

Die Weiterbildungen der Erfindung gemäß den Ansprüchen 6 und 7 geben bevorzugte Möglichkeiten an, wie man eine homogene feine Luftdurchlässigkeit für die Zellenwände realisiert.

Bei wenig empfindlichen Pulvern kann das Anhaften des Pulvers an den Wänden der Zellen des Zellrades auch durch eine oder mehrere feine (0,2 ÷ 035 mm) mit einem Gasstrom beaufschlagte in das Zellradinnere weisende Bohrungen, die eine leicht konische Ausströmöffnung haben, verhindert werden.

Bei einer Pulverquelle gemäß Anspruch 8 kann man die fluidisch erhaltene Abstoßung von Pulverpartikeln von den Zellenwänden in Abhängigkeit vom Drehwinkel des Zellenrades oder der Position zum Gehäuse steuern. Einlassseitig wird man die Druckbeaufschlagung dieser Rückseiten der Zellenradwände klein wählen, um das Hineinbewegen des Pulvers in die einzelnen Zellen, welches unter Schwerkraft erfolgt, nicht zu stören. Auslassseitig kann man diese Druckbeaufschlagung erhöhen, um sämtliche Pulverreste von den Zellenradwänden sicher abzulösen.

Gemäß Anspruch 9 und 10 erhält man auf konstruktiv sehr einfache Weise die winkelabhängig unterschiedliche Druckbeaufschlagung der Rückseiten der luftdurchlässigen Zellenradwände.

Bei einer Pulverquelle gemäß Anspruch 11 ist gewährleistet, dass sich auch an den Wänden des Zellenrad-Aufnahmeraumes des Zellenradgehäuses keine Pulverpartikel bleibend anhängen.

Bei einer Pulverquelle gemäß Anspruch 12 ist gewährleistet, dass einlassseitig eine (Spalt)-Dichtung gegen den Vorratsbehälter gegeben ist.

Bei einer Pulverquelle gemäß Anspruch 13 ist gewährleistet, dass die Dosiereinrichtung Pulver nicht nur bevorzugt an einen einzigen Bereich des unter der Dosiereinrichtung angeordneten Konditionierbehälters erfolgt.

Mit der Weiterbildung der Erfindung gemäß Anspruch 14 wird eine nochmals verbesserte Vergleichmäßigung der Pulverabgabe in den Konditionierbehälter hinein erhalten.

Um das Füllen der einzelnen Kammern des Zellrades zu verbessern, ohne dass Pulverpartikel an den zu den Zellradlagern hinweisenden Seiten anhaften können, ist die offene Querschnittsfläche am unteren Ende des Pulvervorratsbehälters kleiner als die Querschnittsfläche des äußeren Bereiches der Zellrad-Aufnahmeräume (Anspruch 15).

Bevorzugt ist gemäß Anspruch 16 eine trapezförmige Öffnung an der unteren Seite des Pulvervorratsbehälters vorgesehen, wobei die längere der parallelen Grundseiten als erstes den äußeren Rand der jeweiligen Zellrad-Kammer in der Hauptdrehrichtung überstreicht.

In einer weiteren Ausgestaltungsform (Anspruch 17) kann die auslaßseitige Öffnung des Pudervorratsbehälters auch rund oder oval sein.

Um das vollständige Entleeren der Zellrad-Kammer zu gewährleisten ist die Querschnittsfläche an der oberen Seite des Konditionierbehälters gemäß Anspruch 18 gleich oder geringfügig größer als die äußere Querschnittsfläche der Zellrad-Kammer, so dass bei einer kontinuierlichen Drehbewegung des Zellrades die komplette äußere Öffnung der Zellrad-Kammer für eine kurze Zeit offen ist.

Bei einer Pulverquelle gemäß Anspruch 19 braucht man die Energieversorgung und Fluidversorgung nicht über Schleifkontakte vorzunehmen. Beides kann über entsprechend lange Kabel bzw. Schläuche erfolgen.

Auch die Weiterbildung der Erfindung gemäß Anspruch 20 ist im Hinblick darauf vorteilhaft, ein Festbacken von Pulver an Flächen der Dosiereinrichtung zu vermeiden.

Mit der Weiterbildung der Erfindung gemäß Anspruch 21 wird erreicht, dass das im Vorratsbehälter befindliche Pulver schon vor der Dosiereinrichtung fluidisiert wird. Man erhält so ein kontrolliertes gleichmäßiges Nachrutschen von Pulver in die Dosiereinrichtung und damit eine verbesserte Genauigkeit und Konstanz der Dosierung.

Gemäß Anspruch 22 ist eine Entlüftungsöffnung, im Vorratsbehälter vorgesehen, über welche Fluidisierungsgas abgeführt wird. Dieses Fluidisierungsgas strömt entgegen dem Pulver-Förderweg durch das Pulver an die Oberfläche des im Vorratsbehälter befindlichen Pulvervolumens und fluidisiert so das Pulver. Das entweichende Fluidisierungsgas kann in die Abluftleitung der Pulverkabine vor einer zentralen Filtereinheit ohne zusätzliche Reinigungsmaßnahmen eingeleitet werden.

Die Fluidisierung wird auch in kurzen Pausen weitergeführt, da es ca. 10 min. dauert bis sich ein homogenes Pulver-/Luftgemisch einstellt.

Mit der Weiterbildung der Erfindung gemäß Anspruch 23 wird erreicht, dass aus der Entlüftung der Pulverquelle keine Pulverpartikel ausgetragen werden.

Bei einer Pulverquelle gemäß Anspruch 24 kann man kontinuierlich feststellen, wie viel Pulver im Vorratsbehälter noch enthalten ist und wann der Vorratsbehälter seinerseits aus Transportgebinden nachgefüllt werden muss. Die Wägeeinrichtung dient auch zur ständigen Kontrolle der abgeführten Pulvermenge.

Bei einer Pulverquelle gemäß Anspruch 25 wird das in einer Zelle befindliche Pulver zusätzlich durch einen von außen auftreffenden Luftstrahl aus der Zelle zwangsweise abgelöst.

Bei einer Pulverquelle gemäß Anspruch 26 sind kleinere Relativbewegungen zwischen dem Vorratsbehälter und dem Konditionierbehälter möglich; beide Behälter sind aber strömungsmitteldicht miteinander verbunden. Man kann so thermische Längenänderungen aufnehmen, kleine Lageänderungen zulassen, wie sie beim Wiegen des Vorratsbehälters auftreten, und auch vermeiden, dass Schwingungen von einem Behälter auf den anderen übertragen werden. Dies ist im Hinblick auf ein gleichförmiges Pulver/Gasgemisch von Vorteil.

EineAbkopplung des zu wiegenden Systems kann auch durch eine flexible Schlauchleitung, die zur Applikationseinheit führt, gewährleistet werden.

Ein gemäß Anspruch 27 vorgesehenes Sieb im oberen Abschnitt des Konditionierbehälters sorgt für eine räumlich Vergleichmäßigung des in den Konditionierbehälter gegebenen Pulvers. Darüber hinaus werden auch etwa vorhandene Partikelagglomerate zurückgehalten.

Bei der im Anspruch 28 angegebenen Abstimmung zwischen der Weite von Maschen eines Maschensiebes auf die Größe der Pulverpartikel ist eine gute Vergleichmäßigung des Pulverstromes über den Querschnitt des Konditionierbehälters gewährleistet, ohne dass der Durchsatz stark absinkt.

Die Weiterbildung der Erfindung gemäß Anspruch 29 ist im Hinblick auf eine Erhöhung des Durchsatzes und im Hinblick auf ein Aufbrechen etwa angefundener Partikelagglomerate von Vorteil.

Mit der Weiterbildung der Erfindung gemäß Anspruch 30 wird eine gute Durchmischung von Pulver und Fluidisierungsgas bei im wesentlichen laminaren Strömungsverhältnissen im Konditionierbehälter erhalten.

Auch die Weiterbildung der Erfindung gemäß Anspruch 31 dient der Herstellung homogener Mischungsbedingungen für Pulver und Fluidisierungsgas.

Im unteren Endabschnitt des Konditionierbehälters liegt eine besonders homogene Verteilung von Pulverpartikeln und Fluidisierungsgas vor.

Gemäß Anspruch 32 liegt die Pulverentnahme am tiefsten Punkt des Konditionierbehälters, so dass der Behälter auch vollständig entleert werden kann. Damit kann erreicht werden, dass beim Abschalten der Applikationseinheit kein Pulver in der Zuführleitung bleibt und somit kein unfluidisiertes Pulver beim Wiederanfahren austritt. Zu Beachten ist dabei zwar, dass eine zeitliche Verzögerung zwischen Dosierung und Bedarf auftritt. Dies ist aber weitgehend vemachlässigbar, da normalerweise der Einschaltpunkt der Applikationseinheit vor der Ankunft der zu lackierenden Oberfläche liegt.

Die kegelförmige Ausbildung des Fluidbodens verbunden mit der Möglichkeit Behälter und Schlauchsystem leerzufahren bringt gravierende Vorteile für den Betrieb der Gesamtanlage.

Die in den Ansprüchen 33 und 34 angegebenen geometrischen Verhältnisse sind im Hinblick auf das Abgeben eines homogenen und gleichbleibenden fluidisierten Pulverstromes von Vorteil.

Mit der Weiterbildung der Erfindung gemäß Anspruch 35 wird erreicht, dass das Gemisch aus Pulver und Fluidisierungsgas beschleunigt und verdünnt durch Leitungen an die Beschichtungsstationen geführt wird. Dies ist insbesondere in Verbindung mit mehreren Applikationseinheiten vorteilhaft. Bei einer Applikationseinheit (Verbraucher wie Spritzpistole etc.) reicht der Überdruck im Konditionierbehälter für den Pulvertransport in der Regel aus.

Dabei erhält man gemäß Anspruch 36 ohne Verwendung bewegter Teile und auf im Dauerbetrieb zuverlässige Art und Weise die Beschleunigung und Verdünnung des Fließpulverstromes.

Nachstehend wird die Erfindung anhand von Ausführungsbeispielen unter Bezugnahme auf die Zeichnung näher erläutert. In dieser zeigen:
- Figur 1:: ein Blockschaltbild einer Pulverbeschichtungs anlage;
- Figur 2:: eine detailliertere Darstellung einer Fließpulverquelle, welche zu der in Figur 1 gezeigten Pulverbeschichtungsanlage gehört;
- Figur 3:: einen vergrößerten vertikalen Schnitt durch eine abgewandelte Zellenrad-Dosiereinheit, welche in der in Figur 1 gezeigten Pulverbeschichtungsanlage bzw. der in Figur 2 gezeigten Fließpulverquelle verwendbar ist;
- Figur 4:: eine Darstellung der Überlappung von Puderauslass des Vorratsbehälters und Zellenradkammer in einer ersten Variante;
- Figur 5:: eine Darstellung der Überlappung von Puderauslass des Vorratsbehälters und Zellenradkammer in einer zweiten Variante;
- Figur 6:: eine Variante von Figur 2;
- Figur 7:: eine weitere Variante von Figur 2; und
- Figur 8:: eine Variante von Figur 3.

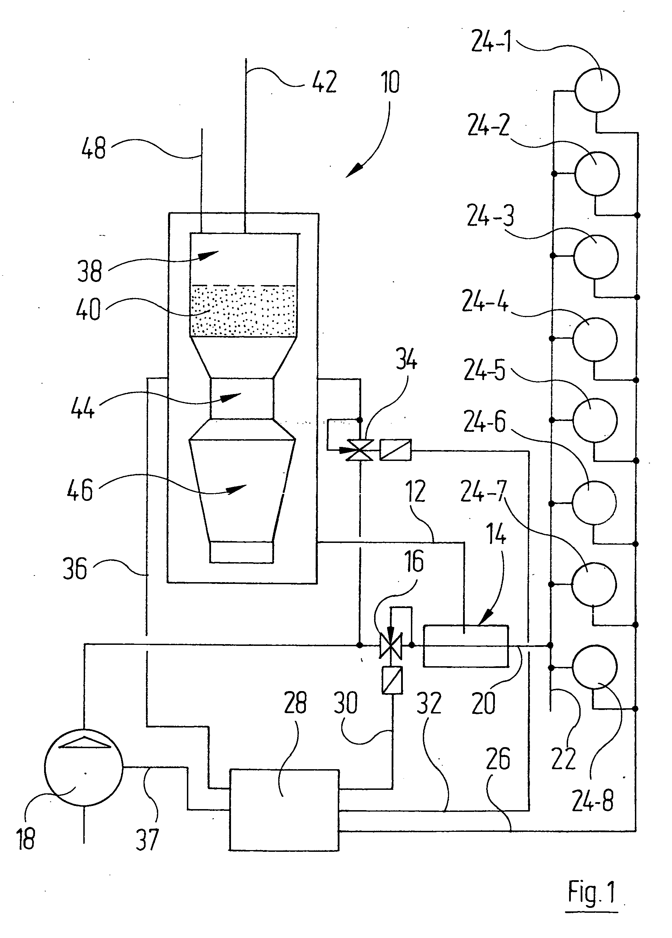

In Figur 1 ist'mit 10 insgesamt eine Fließpulverquelle bezeichnet, welche auf einer Auslassleitung 12 ein Gemisch aus Pulverpartikel und einem Fluidisierungsgas bereitstellt. Dieses Gemisch ist ähnlich wie eine Flüssigkeit fließfähig und wird dem Eingang einer Beschleunigungseinheit 14 zugeführt, die nach dem Wasserstrahl-Prinzip arbeitet und den Fließpulverstrom beschleunigt und verdünnt.

Dies geschieht vorzugsweise durch eine Ringspaltdüse, wie sie in der DE 10 53 295 A1 beschrieben ist. Es sind auch andere Eindüsungen von Beschleunigungsluft denkbar, wie z.B. eine zentrale Düse in einem Schlauch. Wichtig ist nur, dass eine gerichtete Strömung zur Applikationseinheit hin erzeugt wird und dass das Pulver fluidisiert bleibt und keine Ablagerungen an den Schläuchen entstehen.

Hierzu ist bei hier betrachteten Ausführungsbeispiel ein Beschleunigungslufteingang der Beschleunigungseinheit 14 über einen Druckregler 16 mit dem Ausgang eines Verdichters 18 verbunden.

Eine Auslassleitung 20 der Beschleunigungseinheit 14 ist mit einer Verteilerleitung 22 verbunden, welche mit Einlässen einer Vielzahl von Pulverauftragstationen 24 -1, 24 - 2 bis 24 - 8 verbunden ist. Diese werden, wo es im folgenden auf eine Unterscheidung nicht ankommt, einfach als Pulverauftragstationen 24 angesprochen.

Die Pulverauftragstationen 24 sind über ein Steuerkabel 26 mit einer Steuereinheit 28 verbunden.

Letztere steuert über ein weiteres Steuerkabel 30 einen Magneten des Druckreglers 16, um dessen Regeldruck einzustellen.

Über ein weiteres Steuerkabel 32 steuert die Steuereinheit 28 einen Magneten eines weiteren Druckreglers 34, über den ein Einlass für Fluidisierungsgas der Fließpulverquelle 10 mit dem Ausgang des Verdichters 18 verbunden ist.

Schließlich steuert die Steuereinheit 28 über ein Steuerkabel 36 weitere in der Fließpulverquelle 10 enthaltene Lasten und erhält über dieses Kabel aus der Fließpulverquelle 10 Sensor-Ausgangssignale, wie später noch genauer beschrieben wird. Über ein Steuerkabel 37 wird der Verdichter 18 gesteuert.

Auf diese Weise kann man die Geschwindigkeit und die Konzentration der Pulverpartikel steuern, welche den verschiedenen Auftragstationen zugeführt werden, und kann ferner steuern, ob die Auftragstationen 24 arbeiten oder nicht.

Die Fließpulverquelle 10 hat drei Hauptkomponenten. Zunächst einen Vorratsbehälter 38, in welchem ein Volumen 40 an aufzutragendem Pulver enthalten ist, wie in Figur 1 schematisch angedeutet. Um das Pulvervolumen 40 in Abständen wieder aufzufüllen, ist das obere Ende des Vorratsbehälters 38 an eine Speiseleitung 48 angeschlossen, die aus Transportbehältern her mit Pulver versorgt wird.

Die zweite Hauptkomponente der Fließpulverquelle 10 ist eine Dosiereinheit 44, die nach dem Zellenradprinzip arbeitet. Sie ist am unteren Ende des Vorratsbehälters 38 angeordnet und lässt einen genau vorgegebenen Pulverstrom aus dem Vorratsbehälter 38 in einen unter ihr angeordneten Konditionierbehälter 46 (dritte Hauptkomponente) fließen, wie nachstehend noch genauer beschrieben wird. Der Konditionierbehälter 46 vermischt das zugeführte Pulver mit einem Fluidisierungsgas und das so erhaltene Gemisch aus Pulverpartikeln und Fluidisierungsgas wird auf der Auslassleitung 12 bereitgestellt, die eingangs schon erwähnt wurde.

Soweit Fluidisierungsgas nicht über die Auslassleitung 12 abgeführt wird, kann es über eine Entlüftungsleitung 48 abgegeben werden, die vom oberen Ende des Vorratsbehälters 38 ausgeht.

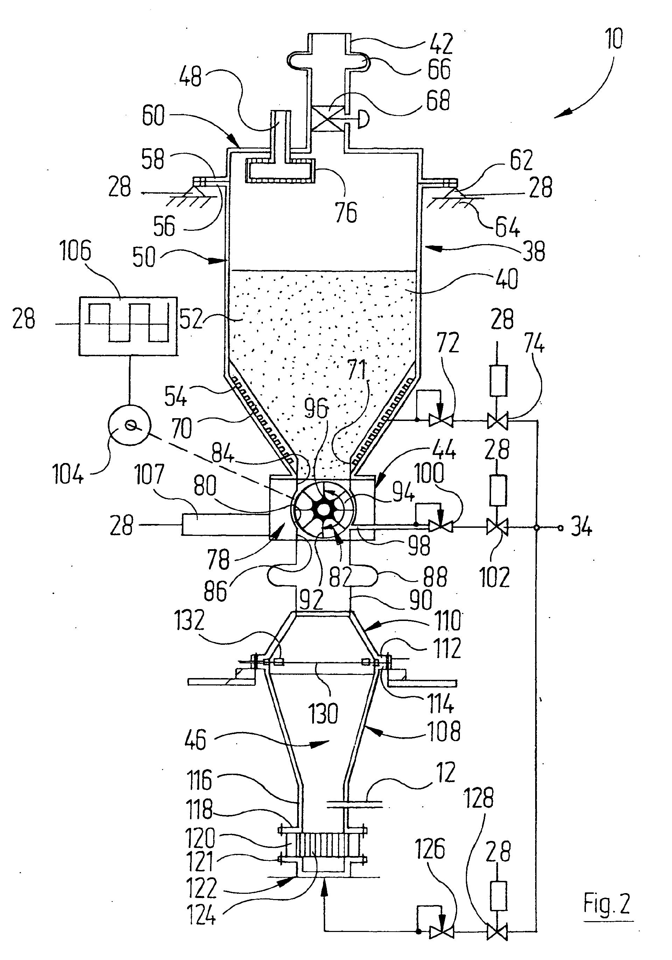

Nunmehr werden unter Bezugnahme auf Figur 2 Einzelheiten der Fließpulverquelle 10 erläutert, wobei Verbindungen zu externen Teilen der Pulverbeschichtungsanlage durch Angabe der entsprechenden Bezugszeichen angedeutet sind.

Wie aus Figur 2 ersichtlich, hat der Vorratsbehälter 38 ein unteres Gehäuseteil 50 mit einer zylindrischen Umfangswand 52 und einer unteren kegelstumpfförmigen Umfangswand 54, die an den unteren Rand der Umfangswand 52 angesetzt ist.

Der obere Rand der Umfangswand 52 trägt einen horizontalen Flansch 56, der mit einem passenden horizontalen Flansch 58 eines Deckels 60 verschraubt ist.

Der Vorratsbehälter 38 ist mit dem Flansch 58 über Wiegezellen 62 an festen Rahmenteilen 64 hängend abgestützt. Die Wiegezellen 62 stellen das momentane Gewicht von Vorratsbehälter 38 und aktuellem Pulvervolumen 40 charakterisierende elektrische Signale bereit, welche auf Eingänge der Steuereinheit 28 gegeben werden.

Die Speiseleitung 42 enthält einen Kompensator 66, und sie ist in der Nachbarschaft des Deckels 60 durch ein Speiseventil 68 verschließbar, welches als Quetschventil oder Kolbenventil ausgebildet sein kann.

Auf der kegelförmigen unteren Umfangswand 54 des Vorratsbehälters 38 ist innen ein poröses kegelförmiges Wandmaterial 70 aus offenporigem Sintermaterial angebracht, dessen unteres Ende einen Auslass 71 begrenzt und dessen Rückseite über einen Druckregler 72 und ein Magnetventil 74, welches durch die Steuereinheit 28 betätigt wird, mit dem Ausgang des Druckreglers 34 verbunden ist.

Bei geöffnetem Magnetventil 74 strömt somit laufend Luft durch das poröse Wandmaterial 70 in das Pulvervolumen 40 hinein und verhindert ein miteinander Verhaken und Zusammenbacken der Pulverpartikel. Auf diese Weise bleibt das Pulver, welches sich im Vorratsbehälter 38 befindet, rieselfähig.

Am Deckel 60 erkennt man femer die Entlüftungsleitung 48, deren in den Vorratsbehälter 38 geführtes Ende durch einen Filterkopf 76 verschlossen ist, welcher scheibenförmig ist und an seinen beiden Endflächen ein Filtermaterial trägt, welches Pulverpartikel zurückhält.

Die Zellenrad-Dosiereinrichtung 44 hat ein Zellenradgehäuse 78, in welchem ein zylindrischer Aufnahmeraum 80 für ein passend zylindrisches Zellenrad 82 vorgesehen ist. Das Zellenradgehäuse 78 hat einen Einlass 84, der mit dem unteren offenen Ende des Vorratsbehälters 38 in Verbindung steht sowie einen unten gelegenen Auslass 86, der mit dem Inneren des Konditionierbehälters 46 über eine einen Kompensator 88 enthaltende Leitung 90 verbunden ist.

Wie aus der Zeichnung ersichtlich, hat das Zellenrad 82 stemförmig angeordnete Zellenwände 92, welche dazwischen liegende Zellen 94 begrenzen. Böden 96 der Zellen 92 sind zylindrisch gestaltet und gehen knick- und stoßfrei in die Seitenflächen der Zellenwände 92 über.

An der Durchschneidungsstelle zwischen Auslass 86 und Aufnahmeraum 80 mündet ein Gehäusekanal 98 des Zellenradgehäuses 78 aus, welcher senkrecht zur Zeichenebene von Figur 2 gleiche Abmessung aufweist wie das Zellenrad 82 und über einen weiteren Druckregler 100 und ein Magnetventil 102 mit dem Auslass des Druckreglers 34 verbunden ist. Das Magnetventil 102 wird wieder von der Steuereinheit 28 her betätigt.

Das Zellenrad 82 wird von einem Elektromotor 104 angetrieben. Dieser wird von einer Steuerschaltung 106 alternierend in Vorwärts- und Rückwärtsrichtung für gleiche Zeitspannen angesteuert. Auf diese Weise wird erreicht, dass das Pulver, welches in den Zellen des Zellenrades 82 vom Vorratsbehälter 38 in den Konditionierbehälter 46 geschleust wird, nicht einseitig in den Vorratsbehälter 46 fällt.

Alternativ kann der Elektromotor 104 ein Schrittmotor sein und die Steuerschaltung 106 kann so ausgebildet sein, dass sie den Schrittmotor jeweils um einer Mehrzahl von Umdrehungen entsprechende Schrittzahlen in Vorwärts- bzw. Rückwärtsrichtung ansteuert.

Die Steuerschaltung 106 wird ihrerseits von der Steuereinheit 28 her gesteuert.

An das Zellenradgehäuse 78 ist ein Vibrator oder Klopfer 107 angesetzt, um das gesamte Gehäuse, das in ihm gelagerte Zellenrad 82 und das untere Ende des Vorratsbehälters 38 in Schwingung zu versetzen. Vorzugsweise wird der Vibrator oder Klopfer 107 von der Steuerschaltung 28 mit einer Frequenz von größenordnungsmäßig 60Hz angeregt. Der Erreger 107 kann ein magnetostriktiver, pneumatischer oder auch ein elektromechanischer Vibrator sein.

Der Konditionierbehälter 46 besteht seinerseits wieder aus einem unteren Behälterteil 108 sowie einem oberen Behälterteil 110. Diese haben an den einander benachbarten Rändern Flansche 112 bzw. 114, an denen sie miteinander verschraubt sind.

Das obere Behälterteil 120 erweitert sich vom Abgabeende der Leitung 90 aus kegelstumpfförmig nach unten, während sich das untere Behälterteil 168 ausgehend vom oberen Behälterteil 110 nach unten kegelförmig verjüngt und dann einen zylindrischen Behälterabschnitt 116 hat. Letzteres hat an seinem unteren Ende einen horizontalen Flansch 118, welcher über ein Ringteil 120 mit einem unteren becherförmigen Deckel 122 verschraubt ist.

Innerhalb des Ringteiles 122 liegend ist ein scheibenförmiges gasdurchlässiges Bodenteil 124 angeordnet. Der durch dessen Unterseite und den Deckel 122 begrenzte Bodenrückraum ist über einen Druckregler 126 und ein Magnetventil 128 mit dem Auslass des Druckreglers 34 verbunden.

Zwischen den beiden Gehäuseteilen 108 ist ein Maschensieb 130 unter Zwischenschaltung von Ultraschallerzeugern 132 eingespannt. Das Maschensieb 130 ist aus Edelstahldrähten gewoben. Zur Verwendung mit Pulverlacken, welche Pulverpartikel mit einer mittleren Größe von etwa 25 µm aufweisen, beträgt der Durchmesser des Edelstahldrahtes 40 µm und die Maschenweite des Siebes 125 µm.

Die Ultraschallerzeuger 132 werden von der Steuereinheit 28 mit einer Frequenz von etwa 20 kHz erregt.

Das Maschensieb 130 erstreckt sich somit senkrecht zur Achse des Konditionierbehälters 46 eben und gespannt durch einen oberen Abschnitt des Konditionierbehälters, wobei es gleichzeitig eine hochfrequente Bewegung mit kleiner Amplitude durchführt. Auf diese Weise wird Pulver, welches auf die Oberseite des Maschensiebes 130 fällt in zur Achse des Konditionierbehälters 46 senkrechten Richtungen vergleichmäßigt, wobei etwa im auftreffenden Pulver enthaltene Partikelagglomerate aufgebrochen werden.

Der hinter dem Maschensieb 130 erhaltene vergleichmäßigte Pulvervorhang fällt unter Schwerkraft nach unten und wird hierbei mit dem aus dem Bodenteil 124 laminar senkrecht nach oben gerichteten Luftstrom innig und gleichmäßig vermischt.

Man erhält so in dem zylindrischen Behälterabschnitt 116 eine homogene Mischung aus Pulverpartikel und durch Luft gebildetem Fluidisierungsgas.

Die Auslassleitung 12 ist in der Mitte des Behälterabschnittes 116 geführt und zwar etwa auf 2/3 der Höhe des zylindrischen Behälterabschnittes 16.

Ist der Abstand zwischen dem Maschensieb 130 und der Oberseite des Bodenteiles 124 D und ist der Abstand der Auslassleitung 12 von der Oberseite des Bodenteiles 124 d so verhalten sich d:D zwischen etwa 1:8 und etwa 1:4, vorzugsweise etwa wie 1:6.

Die oben unter Bezugnahme auf Figur 2 näher erläuterte Fließpulverquelle 10 arbeitet folgendermaßen:

Das im Vorratsbehälter 38 befindliche Pulvervolumen 40 wird durch die durch das poröse Wandmaterial 70 hindurchtretende Luft durchströmt und in rieselfähigem Zustand gehalten. Das Zellenrad 82 nimmt vom anstehenden Pulver kontinuierlich den Volumen der Zellen entsprechende Pulvermengen ab, die beim Erreichen des Auslasses 86 aus den Zellen nach unten und durch die Leitung 90 auf die Oberseite des Maschensiebes 130 fallen.

Die über den Gehäusekanal 58 zugeführte Luft unterstützt das Ablösen von Pulver aus den Zellen des Zellenrades 82.

Das Maschensieb 130 wird symmetrisch zur Behältermittelebene mit Pulvermaterial beaufschlagt, da das Zellenrad 82 durch den Elektromotor 104 durch die von der Steuerschaltung 106 abgegebenen Signale um gleiche Zeitspannen in Vorwärts- und Rückwärtsrichtung betrieben wird.

Durch die Siebwirkung und zusätzlich durch die Ultraschallbeaufschlagung wird das Pulvermaterial nochmals in transversaler Richtung vergleichmäßigt, und man erhält unterhalb des Maschensiebes 130 einen im wesentlichen gleichförmigen Pulvervorhang, der nach unten fällt und hierbei dem nach oben gerichteten Luftstrom begegnet, der durch das Bodenteil 124 abgegeben wird.

An der oben erwähnten Stelle des zylindrischen Behälterabschnittes 116 wird eine homogene Mischung aus Pulver und Fluidisierungsgas durch die Auslassleitung 12 abgezogen.

Wird der Fließpulverquelle 10 insgesamt mehr Druckluft über die Druckregler 72, 100 und 126 zugeführt als Fluidisierungsluft über die Auslassleitung 12 zusammen mit Pulver abgeführt wird, so wird die Restmenge an Luft über den Filterkopf 76 und die Entlüftungsleitung 48 abgeführt.

Es versteht sich, dass man in Abwandlung des oben geschilderten Ausführungsbeispieles nach Figur 2 für die unterschiedliche Druckbeaufschlagung der an die Überdruckventile 72, 100 und 126 angeschlossenen Lasten auch programmierbare Druckregler verwenden kann, ähnlich wie unter Bezugnahme auf die Druckregler 16 und 34 von Figur 1 beschrieben.

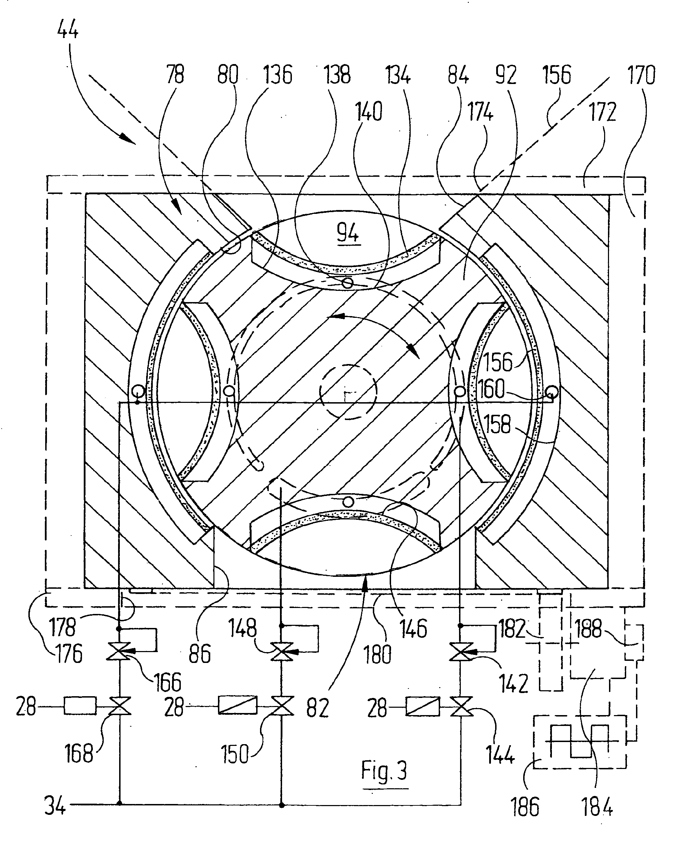

In Figur 3 sind Bauteile der Zellenrad-Dosiereinheit 44, die obenstehend unter Bezugnahme auf die Figuren 1 und 2 schon erläutert wurden, wieder mit denselben Bezugszeichen versehen, soweit sie dieselbe Funktion erfüllen, und zwar auch dann, wenn sie sich in Einzelheiten der Ausbildung unterscheiden.

Nachstehend werde nur noch die Unterschiede zu der schon beschriebenen Zellenrad-Dosiereinheit 44 beschrieben.

Die Zellen 94 des Zellenrades 92 haben jeweils die Form von Kugelabschnitten (Kalotten) und sind jeweils durch eine Bodenwand 134 begrenzt, die aus porösem, gasdurchlässigem Material hergestellt ist. Hinter den Bodenwänden 134 liegt jeweils eine Luftkammer 136, die mit einem achs-parallelen Speisekanal 138 in Verbindung steht. Letzterer ist axial bis in die Figur 3 hinter der Zeichenebene zu denkende Stimfläche des Zellenrades 92 fortgesetzt.

Mit der Bahn der Enden der Speisekanäle 138 radial fluchtend ist eine erste Speisenut 140 vorgesehen, die sich über einen Winkel von etwa 280° erstreckt. Die Speisenut 140 ist über einen Druckregler 142 und ein Magnetventil 144 mit dem Ausgang des Verdichters 34 verbunden.

Der Druck des Druckreglers 142 ist so eingestellt, dass die Bodenwände 134 von einem kleinen Luftstrom durchsetzt werden, der gerade verhindert, dass sich Pulverpartikel an der Außenfläche der Bodenwand 134 festsetzen, der jedoch nicht dazu ausreicht, die Pulverpartikel wegzublasen.

Eine zweite Speisenut 146 erstreckt sich beim Auslass 86 des Zellenradgehäuses 78 über ein Winkel von etwa 60°. Diese Nut ist mit etwas größerer radialer Abmessung gezeichnet, um so anzudeuten, dass sie über einen weiteren Druckregler 148 und ein Magnetventil 150 mit größerem Druck beaufschlagt ist als die Speisenut 140. Sie erzeugt durch die Bodenwand 134 bei Stellung beim Auslass 86 einen Luftstrom, durch welchen das vor der Bodenwand 134 befindliche Rest-Pulvervolumen, welches nicht schon durch Schwerkraft abgefallen ist, zwangsweise abgeblasen wird.

Wie aus der Zeichnung ersichtlich, ist die Krümmung der Bodenwände 134 so gewählt, dass die radial außen liegende Seite der Bodenwände 134 jeweils eine glatte stetige Fortsetzung des als kegelstumpfförmige Einführschräge ausgebildeten Einlasses 84 darstellt, wenn eine Bodenwand 134 einlassseitig auf der vertikalen Achse von Einlass und Auslass des Zellenradgehäuses 78 steht. Der Einlass 84 stellt seinerseits eine Verlängerung eines trichterförmigen unteren Endabschnittes des Vorratsbehälters 38 dar, der in Figur 3 nur gestrichelt bei 156 wiedergegeben ist.

Man erkennt, dass die Speisenuten 140 und 146 symmetrisch zur vertikalen Mittelebene der Zellenrad-Dosiereinrichtung 44 ausgebildet sind, so dass das Zellenrad 82 wieder in beiden Drehrichtungen gleichermaßen verwendet werden kann, wie oben beschrieben.

Soll das Zellenrad nur in einer Drehrichtung verwendet werden, so kann man die Speisenut 140 auch auf denjenigen Umfangswinkel beschränken, innerhalb dessen Pulvermaterial auf der Bodenwand 134 liegt.

Um ein vorzeitiges Herausfallen von Pulvermaterial im Spalt zwischen Aufnahmeraum 80 und Zellenrad 82 zu verhindern, kann man den Aufnahmeraum 80 jeweils über einen Winkel von beim Ausführungsbeispiel etwa 80° mit einer gasdurchlässigen Wand 156 versehen, hinter welcher eine Luftkammer 158 liegt. Diese ist über einen Speisekanal 160, einen Druckregler 166 sowie ein Magnetventil 168 wieder mit dem Ausgang des Verdichters 34 verbunden. Dies erfolgt beim Ausführungsbeispiel nach Figur 3 wieder spiegelbildlich zur vertikalen Mittelebene des Zellenradgehäuses 78.

Bei der Ausbildung der Dosiereinheit 44 gemäß Figur 3 wird somit ein Haftenbleiben der Pulverpartikel am Zellenrad bzw. am Zellenradgehäuse verhindert, ohne dass es zu einem Entweichen von Pulverpartikeln aus den Zellen 94 kommt.

Bei der in Figur 3 gezeigten Ausbildung der Zellenrad-Dosiereinheit 44 ist der gesamte Förderweg des Pulvers vom Auslass des Vorratsbehälters 38 bis zum Auslass der Dosiereinheit 44 frei von Winkeln und Kanten, an denen sich Pulverpartikel anhäufen oder verklemmen könnten.

Damit ist die Abgabe von Pulverpartikel an den Konditionierbehälter 46 gleichmäßig und weitgehend homogen.

Zur nochmals verbesserten Vergleichsmäßigung der Pulverabgabe in den Konditionierbehälter 46 kann man das Zellenradgehäuse 78 mit einer zylindrischen Umfangsfläche versehen und in einer zylindrischen Buchse um die Gehäuseachse drehbar lagern, wie in Figur 3 gestrichelt dargestellt.

Dort ist mit 170 eine Lagerbuchse bezeichnet, die das Zellenradgehäuse 78 im Gleitspiel umgibt und eine obere Lagerplatte 172 trägt, welche die obere Stirnfläche des Zellenradgehäuses 78 übergreift. Eine mittige Öffnung 174 der Lagerplatte 172 stellt eine glatte und bündige Verbindung zwischen dem Einlass 84 und der kegelförmigen Innenfläche 156 des unteren Endes des Vorratsbehälters 38 her.

Eine untere Lagerplatte 176 hat eine mittige Öffnung 178, die vom Auslass 86 des Zellenradgehäuses 78 radial nach außen beabstandet ist. Die Lagerplatten 172 und 176 sind durch nicht gezeigte Schrauben mit der Lagerbuchse 170 verbunden.

Innerhalb der Öffnung 178 trägt die untere Stirnfläche des Zellenradgehäuses 78 einen Zahnkranz 180, auf welchem ein Zahnrad 182 läuft, welches um eine horizontale Achse drehbar ist und von einem Elektromotor 184 angetrieben wird. Dieser wird von einem Steuerkreis 186 her alternierend um einen vorgegebenen Winkel (von beim Ausführungsbeispiel einigen Umdrehungen, so dass sich das Zellenradgehäuse um ganzzahlige Vielfache von 180° dreht) in Vorwärtsrichtung bzw. zur Rückwärtsrichtung angetrieben, wobei der in der jeweiligen Richtung zurückgelegte Weg zum Ausgangssignal eines Winkelgebers 188 proportional ist, der mit der Welle des Elektromotors 184 gekoppelt ist.

Damit ist die Verteilung des in dem Dosierbehälter 46 abgegebenen Pulvervorhanges nicht nur in radialer Richtung sondern auch in Umfangsrichtung gleichmäßig.

Bei den verschiedenen luftdurchlässigen Materialien, die von der Rückseite mit Überdruck beaufschlagt sind, handelt es sich vorzugsweise um Sintermaterialien, die nochmals vorzugsweise aus einem Kunststoffmaterial bestehen. In Fällen, in denen elektrostatische Aufladungen vermieden werden müssen, kann das poröse Wandmaterial aber auch aus einem gesinterten Metall wie gesinterter Bronze bestehen und elektrisch mit Erde verbunden sein.

Die Porengröße des Sintennateriales ist so gewählt, dass sie kleiner ist als der Durchmesser der Pulverpartikel, so dass sich auch dann, wenn diese Materialien nicht von der Rückseite her mit Druck beaufschlagt sind, Pulverpartikel allenfalls lose und nur teilweise in die Poren des Sintermateriales legen.

Für die Behälter, Verbindungsleitungen und anderen durchströmten Teile der Fließpulverquelle 10 wird Edelstahl als Material bevorzugt.

Die Regeldrucke für die verschiedenen Druckventile werden so gewählt, dass man die gewünschte Fluidisierung und das gewünschte Verhältnis zwischen Fluidisierungsgas und Pulver erhält. Typischerweise wird im Inneren des Konditionierbehälters 46 ein Druck aufrecht erhalten, der etwa 0,25 atm größer ist als der Druck in den restlichen Teilen der Fliespulverquelle 10.

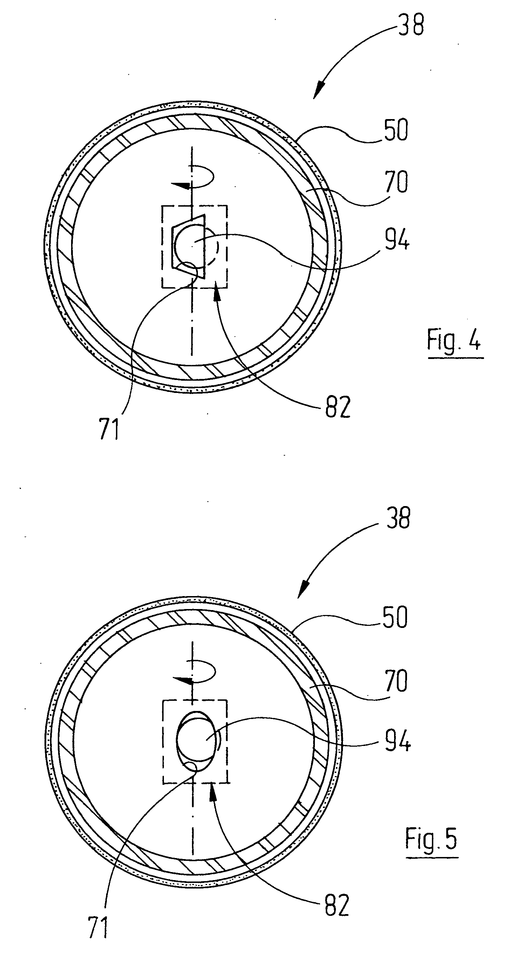

Bei den in den Figuren 4 bis 8 gezeigten und nachstehend erläuterten Varianten sind Komponenten, die in der Funktion oben schon erläuterten Komponenten entsprechen, wieder mit denselben Bezugszeichen versehen. Sie werden, abgesehen von Änderungen, nachstehend nicht nochmals beschrieben.

Figuren 4 und 5 zeigen Aufsichten auf das untere Ende abgewandelter Vorratsbehälter 38, bei denen der Auslass 71 nicht rotationssymmetrisch ist. Femer ist das darunter liegende Zellenrad 82 mit einer seiner kalottenförmig ausgebildeten Zellen 94 angedeutet.

Gemäß Figur 4 hat der Auslass 94 die Form eines Trapezes, wobei die zu einander parallelen Trapezseiten parallel zur Drehachse des Zellenrades 82 verlaufen. Dabei liegt die längere Trapezseite so, dass sie von einer sich annähernden Zelle 94 zuerst getroffen wird.

Gemäß Figur 5 ist der Auslass 71 oval, wobei die lange Achse der Ellipse parallel zur Zellenradachse verläuft.

In beiden Fällen ist die lange Achse des Auslasses 71 größer als der Durchmesser der Zellen 94, und der Auslass 71 ist symmetrisch zur Bahn der Zellenmittelpunkte.

Ist der Auslass 71 kreisförmig, so ist sein Durchmesser ebenfallls größer als der Durchmesser der Zellen 94.

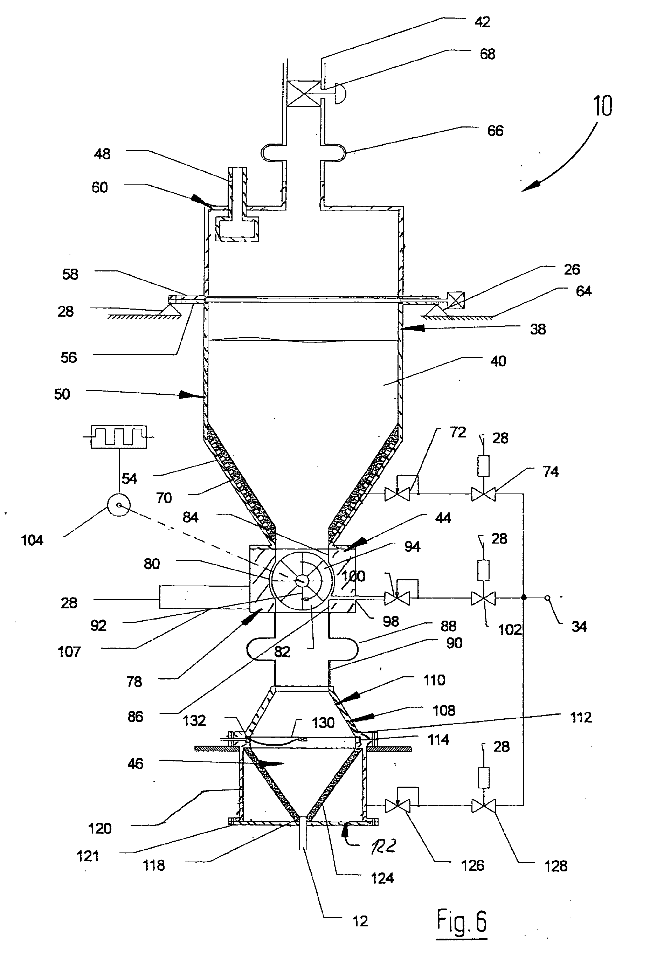

Die Fließpulverquelle 10 nach Figur 6 unterscheidet sich von derjenigen nach Figur 2 durch den Aufbau des Konidtionierbehälters 46.

Das poröse Bodenteil 124 ist kegelförmig und von seiner untenliegenden Spitze geht die das fluidiserte dosierte Pulver erhaltende Auslassleitung 12 aus.

Das größere axiale Abmessung aufweisende zylindrische Ringteil 120 umgibt das Bodenteil 124 und ist am unteren Ende durch den nun scheibenförmigen Deckel 122 verschlossen, durch welchen die Auslassleitung 12 dicht hindurchgeführt ist..

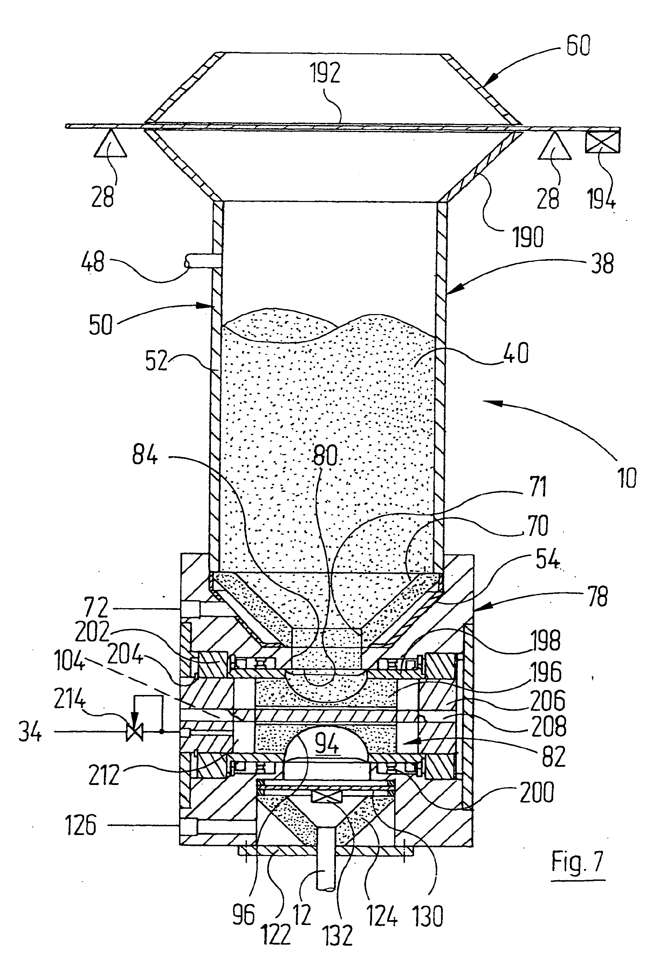

Bei der Fließpulverquelle 10 nach Figur 7 ist zwischen dem nun kegelstumpfförmigen Deckel 60 und einem umgekehrt kegelstumpfförmigen oberen Endabschnitt 190 ein Sieb 192 fest eingespannt, an welchem der Vorratsbehälter 38 auf den Wiegezellen 28 abgestützt ist. Das Sieb 192 wird durch einen Vibrator oder Klopfer 194 in hochfrequente Schwingungen versetzt, die in der Praxis bei etwa 10 kHz bis etwa 60 kHz liegen. Auf diese Weise werden Agglomerate und Klumpen schon beim Füllen des Vorratsbehälters 38 aufgebrochen.

Das Zellenrad 82 hat nun einen Radkörper 196 der vollständig aus einem offenporigen Sintermaterial hergestellt ist, wie es schon weiter oben angesprochen wurde. Der Radkörper 196 ist in seiner Umfangsfläche mit den kalottenförmigen Zellen 94 ausgebildet. Er ist beidseitig von Endhülsen 198 fest getragen, die in Lagern 200 laufen. Axiallagerringe 202 positionieren das Zellenrad 82 in axialer Richtung. Sie sind ihrerseits durch Sprengringe 204 an Lagerblöcken 206 abgestützt.

Durch den Radkörper 196 erstreckt sich drehschlüssig eine Welle 208. Diese ist in ihrem mittleren Abschnitt mit einer axialen Nutung 210 versehen, so dass ein Strömungsmittelweg zwischen den beiden Stirnflächen des Radkörpers 190 und zur Innenfläche des Radkörpers 196 erhalten wird.

Wie aus Figur 7 ersichtlich, sind die Lagerblöcke 206 von den Stimflächen des Radkörpers 196 beabstandet, und eine der so erhaltenen Kammern 212 ist über einen Druckregler 214 mit dem Ausgang des Druckreglers 34 verbunden. Dieser dient, wie die anderen dem Druckregler 34 nachgeschalteten Druckregler dazu, einen lokal besonders geeigneten Druck bereitzustellen.

Man erkennt, dass man so die Begrenzungswände der Zellen 94 mit Fluidisierungsluft beaufschlagen kann, welche ein Hängenbleiben von Pulverpartikeln vermeidet.

Beim Ausführungsbeispiel nach Figur 7 dient eine unterer Abschnitt des Gehäuses 78 zugleich zur Aufnahme des Bodenteiles 124, eine oberer Teil des Gehäuses 78 zur Aufnahme des unteren Endes des Vorratsbehälters 38. Die gesamte Fließpulverquelle baut somit sehr kompakt.

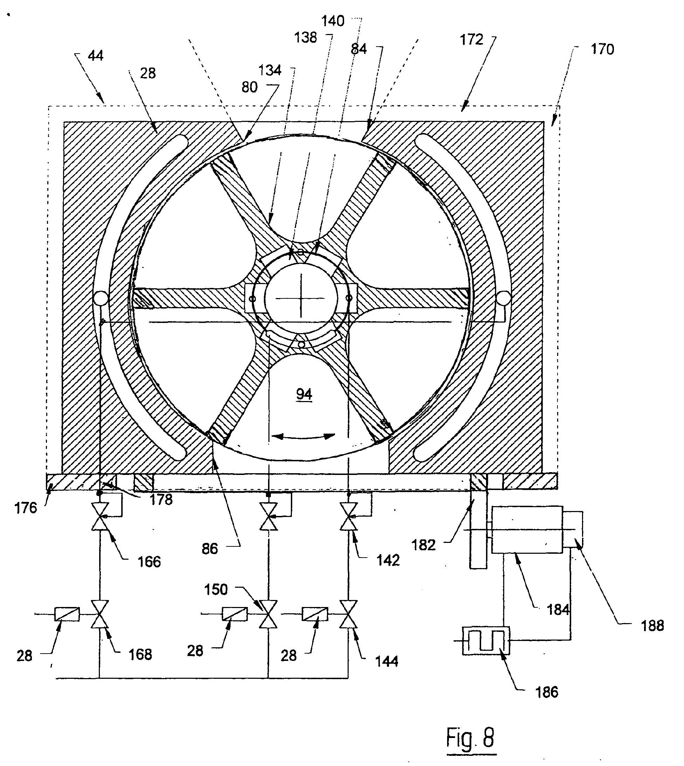

Beim Ausführungsbeispiel der Dosiereinheit 44 nach Figur 8 sind das Zellenrad 82 und das Gehäuse 78 beide aus einem offenporigen Sintermaterial hergestellt, wie es oben schon verschiedentlich angesprochen wurde. Damit ist der mechanische Aufbau einfacher als beim Ausführungsbeispiel nach Figur 3; die Funktion ist letztlich dieselbe: Sowohl auf dem Zellenrad 82 als auch auf dem Gehäuse 78 können keine Pulverpartikel hängen bleiben, da sie von aus den Oberflächen austretender Luft abgehoben und wegbewegt werden.

## Patentansprüche

1. Pulverquelle für eine Pulverbeschichtungsanlage, mit
a) einem Vorratsbehälter (38) für Pulver;
b) einem Konditionierbehälter (46), welcher einen ersten Einlass (90) für Pulver, einen zweiten Einlass (124) für Fluidisierungsgas und einen Auslass (12) für ein fließfähiges Pulver/Gasgemisch aufweist; und
c) einer zwischen einem Auslass des Vorratsbehälters (38) und dem Einlass (90) des Konditionierbehälters (46) angeordneten Dosiereinrichtung (44), welche ein Zellenrad (82) und ein Zellenradgehäuse (78) aufweist, welches eine Aufnahmekammer (80) für das Zellenrad (82) sowie einen Pulvereinlass (84)und einen Pulverauslass (86) aufweist, die mit der Aufnahmekammer (80) in Verbindung stehen.

2. Pulverquelle nach Anspruch 1, bei welcher Zellen (94) des Zellenrades (82) kantenfreie Begrenzungswände haben.

3. Pulverquelle nach Anspruch 2, bei welcher zumindest ein Bodenabschnitt (96) der Zellen (94) teilzylindrisch oder teilsphärisch ist.

4. Pulverquelle nach Anspruch 2 oder 3, bei welcher die Begrenzungswände der Zellen (94) in einer Stellung des Zellenrades (82) stetig in den Einlass (84) des Zellenradgehäuses (78) übergehen.

5. Pulverquelle nach einem der Ansprüche 1 bis 4, bei welcher die Begrenzungswände der Zellen (94) zumindest teilweise luftdurchlässig (134) sind und auf ihrer vom Zellenradgehäuse (78) abgewandten Seite mit Druckgas beaufschlagt sind.

6. Pulverquelle nach Anspruch 5, **dadurch gekennzeichnet, dass** die Begrenzungswände der Zellen (94) zumindest teilweise durch mindestens ein Sintermaterial gebildet sind.

7. Pulverquelle nach Anspruch 6, bei welcher die Sintermaterialien Kunststoff-Sintermaterialien oder elektrisch leitende Sintermaterialien, insbesondere gesinterte Metallmaterialien sind.

8. Pulverquelle nach einem der Ansprüche 5 bis 7, bei welcher die Druckgasbeaufschlagung der luftdurchlässigen Abschnitte der Begrenzungswände (134) in Abhängigkeit von der Winkelstellung des Zellenrades (82) erfolgt oder in Abhängigkeit von der Position zum Gehäuse steht.

9. Pulverquelle nach Anspruch 8, **dadurch gekennzeichnet, dass** die Druckgasbeaufschlagung der Rückseite der gasdurchlässigen Abschnitte der Begrenzungswände der Zellen (94) über gehäusefeste Speisenuten (140, 146) erfolgt, die mit der Bahn im Zellenrad (82) ausgebildeter Speisekanäle (138) überlappen.

10. Pulverquelle nach Anspruch 9, **dadurch gekennzeichnet, dass** die druckbeaufschlagten Rückseiten der luftdurchlässigen Abschnitte der Begrenzungswände der Zellen (94) über mindestens zwei Steuemuten (140, 146) erfolgt, von denen eine eine Winkelerstreckung aufweist, in welcher die Speisekanäle (138) des Zellenrades (82) dann mit der Speisenut (146) überlappen, wenn das Zellenrad (82) dem Auslass (86) des Zellenradgehäuses (78) benachbart ist.

11. Pulverquelle nach einem der Ansprüche 1 bis 10, **dadurch gekennzeichnet, dass** zumindest ein Abschnitt (156) der Begrenzung der Aufnahmekammer (80) für das Zellenrad (82) zumindest teilweise gasdurchlässig ist und auf ihrer Rückseite mit Druckgas beaufschlagt ist.

12. Pulverquelle nach Anspruch 11, **dadurch gekennzeichnet, dass** der luftdurchlässige Abschnitt (156) der Begrenzungswand der Aufnahmekammer (80) mit seinem dem Pulvereinlass (84) benachbarten Ende vom Pulvereinlass (84) beabstandet ist.

13. Pulverquelle nach einem der Ansprüche 1 bis 12, bei welcher das Zellenrad (82) alternierend in entgegengesetzten Richtung angetrieben wird.

14. Pulverquelle nach einem der Ansprüche 1 bis 13, bei welcher das Zellenradgehäuse (78) um die Achse seines Auslasses (86) drehbar ist.

15. Pulverquelle nach einem der Ansprüche 1 bis 14, **dadurch gekennzeichnet, dass** die offene Querschnittsfläche am unteren Ende des Pulvervorratsbehälters (38) kleiner als die Querschnittsfläche des äußeren Bereiches der Zellrad-Aufnahmekammer.

16. Pulverquelle nach einem der Ansprüche 1 bis 15, **dadurch gekennzeichnet, dass** eine trapezförmige Öffnung an der unteren Seite des Pulvervorratsbehälters (38) vorgesehen, wobei die längere der parallelen Grundseiten als erste den äußeren Rand der jeweiligen Zelle (94) des Zellenrades (82) in der Hauptdrehrichtung überstreicht.

17. Pulverquelle nach einem der Ansprüche 1 bis 16, **dadurch gekennzeichnet, dass** der Puderauslass (84) des Pudervorratsbehälters (38) rund oder oval ist.

18. Pulverquelle nach einem der Ansprüche 1 bis 17, **dadurch gekennzeichnet, dass** die Querschnittsfläche an der oberen Seite des Konditionierbehälters (46) gleich oder geringfügig größer als die äußere Querschnittsfläche der Aufnahmekammer (84) für das Zellenrad (82) ist.

19. Pulverquelle nach einem der Ansprüch1 14 bis 18, bei welcher das Zellenradgehäuse (78) alternierend um Winkel von 180° oder ganzzahlig in Vielfachen von 180° in entgegengesetzter Drehrichtung um die Achse des Auslasses (86) gedreht wird.

20. Pulverquelle nach einem der Ansprüche 1 bis 19, bei welcher das Zellenrad (82) direkt oder über das Zellenradgehäuse (78) an einen Schwingungserreger (107) angekoppelt ist, der vorzugsweise mit einer Frequenz von 10 bis 120 Hz arbeitet.

21. Pulverquelle nach einem der Ansprüche 1 bis 20, bei welcher ein unterer Abschnitt (54) des Vorratsbehälters (38) zumindest teilweise mit einer gasdurchlässigen Wand (70) versehen ist, deren Rückseite mit einer Druckgasquelle verbunden ist.

22. Pulverquelle nach einem der Ansprüche 1 bis 21, bei welcher der Vorratsbehälter (38) mit einer Entlüftungseinrichtung (48) versehen ist, die vorzugsweise in seinem oberen Abschnitt vorgesehen ist.

23. Pulverquelle nach Anspruch 22, bei welcher ein der Entlüftungseinrichtung (48) vorgeschaltetes Filter (76) vorgesehen ist, welches Pulverpartikel zurückhält.

24. Pulverquelle nach einem der Ansprüche 1 bis 23, bei welcher der Vorratsbehälter (38) über eine Wiegeeinrichtung (62) an einem festen Rahmenteil (64) abgestützt ist.

25. Pulverquelle nach einem der Ansprüche 1 bis 24, bei welcher das Zellenradgehäuse (78) einen Druckgaskanal (98) aufweist, der in der Nachbarschaft des Auslasses (86) des Zellenradgehäuses (78) in die Aufnahmekammer (80) einmündet.

26. Pulverquelle nach einem der Ansprüche 1 bis 25, bei welcher das Zellenradgehäuse (78) über einen Kompensator (88) mit dem Konditionierbehälter (46) verbunden ist.

27. Pulverquelle nach einem der Ansprüche 1 bis 26, **dadurch gekennzeichnet, dass** in einem oberen Abschnitt des Konditionierbehälters (46) ein im wesentlichen senkrecht zur Behälterachse verlaufendes Sieb (130) angeordnet ist.

28. Pulverquelle nach Anspruch 27, bei welcher das Sieb (130) ein Maschensieb ist, dessen Maschenweite das etwa 2,5 bis etwa 5-fache des mittleren Durchmessers der Pulverpartikel beträgt.

29. Pulverquelle nach Anspruch 27 oder 28, bei welcher an das Sieb (130) ein Vibrator (112) angekoppelt ist, welcher vorzugsweise mit einer Frequenz von etwa 10 kHz bis etwa 60 kHz arbeitet.

30. Pulverquelle nach einem der Ansprüche 1 bis 29, **dadurch gekennzeichnet, dass** ein Boden (124) des Konditionierbehälters (46) gasdurchlässig ist und auf seiner Rückseite mit einer Druckgasquelle verbindbar ist.

31. Pulverquelle nach Anspruch 30, bei welcher ein über dem Boden (124) liegender unterer Endabschnitt (116) des Konditionierbehälters (46) oder der boden (124) selbst kegelförmig oder zylindrisch ist.

32. Pulverquelle nach einem der Ansprüche 1 bis 31, **dadurch gekennzeichnet, dass** der Auslass (112) für das Gemisch aus Pulver und Fluidisierungsgas in einem unteren Endabschnitt (116) des Konditionierbehälters (46) vorgesehen ist, vorzugsweise von einem radial zentralen Bereich desselben ausgeht.

33. Pulverquelle nach Anspruch 32, **dadurch gekennzeichnet, dass** der Auslass (12) etwa bei 2/3 der Gesamthöhe des zylindrischen Endabschnittes (116) liegt.

34. Pulverquelle nach Anspruch 33 in Verbindung mit Anspruch 27, bei welcher der in Achsrichtung gemessene Abstand zwischen dem Auslass (112) und dem Boden (124) des Konditionierbehälters (46) etwa. 1/8 bis etwa 1/4, vorzugsweise etwa 1/6 desjenigen Abstandes ist, der zwischen dem Sieb (130) und dem Boden (124) des Konditionierbehälters (46) liegt.

35. Pulverquelle nach einem der Ansprüche 1 bis 34, bei welcher hinter dem Gemischauslass (12) eine Beschleunigungseinheit (14) vorgesehen ist, welche das Gemisch aus Pulver und Fluidisierungsgas beschleunigt.

36. Pulverquelle nach Anspruch 35, bei welcher die Beschleunigungseinheit (14) nach dem Wasserstrahlprinzip arbeitet und einen mit einer Beschleunigungsgasquelle verbundenen Beschleunigungsgaseinlass und einen mit dem Gemischauslass (12) des Konditionierbehälters (46) verbundenen Gemischeinlass aufweist.
